# DEMANDE DE BREVET EUROPEEN

(11) **EP 0 521 569 A1**
(43) Date de publication de la demande: **07.01.1993**
(21) Numéro de dépôt: 92201937.7
(22) Date de dépôt: 30.06.1992
(51) Int. Cl.: B23H 7/08

(54) **Fil électrode pour le découpage par électroérosion**

(30) Priorité: 03.07.1991 CH 2008/91
(71) Demandeur: CHARMILLES TECHNOLOGIES S.A., CH-1217 Meyrin 1 (CH)
(72) Inventeur: Briffod, Jean-Paul, F-74380 Lucinges (FR)

(57) **Abrégé**

Electrode-fil pour le découpage par électroérosion, comportant une âme métallique bonne conductrice de l'électricité, revêtue d'une seule couche d'alliage constituée par le codépôt électrolytique d'au moins deux métaux dont l'un est un métal à bas point de fusion et de vaporisation, comme le zinc. Cette couche d'alliage électrolytique est assez ductile pour que le diamètre d'un fil de 1mm environ revêtu de cette couche, puisse être réduit dans une proportion qui va du 1/3 au 1/10ème de son diamètre initial, en une seule opération de tréfilage à froid. Sa ductilité doit de préférence être très proche de celle de l'âme métallique. Il peut être avantageux que le métal à bas point de fusion et de vaporisation et les autres métaux de l'alliage ne diffusent pas à chaud les uns dans les autres, comme un alliage de zinc et de nickel par exemple, et que les teneurs des métaux de l'alliage restent constantes sur toute l'épaisseur de cette couche. Selon certaines variantes, l'âme métallique présente une composition uniforme du centre du fil à la couche d'alliage.
Ils sont fabriqués à froid, en deux étapes :
- on applique cette couche d'alliage électrolytique à partir d'un seul bain d'électrodéposition, puis
   - - on réduit, en une seule opération de tréfilage à froid, le diamètre du fil dans une proportion qui va du 1/3 au 1/10ème de son diamètre initial.
La composition du bain galvanique et les paramètres électrochimiques et électriques de l'étape d'électrodéposition sont choisis de manière à assurer une composition uniforme à la couche d'alliage électrolytique.

## Description

La présente invention a pour objet la composition et la fabrication d'une électrode-fil pour le découpage par électroérosion (découpage EDM).
Rappelons que le découpage EDM est réalisé avec un fil-électrode défilant en continu à travers une pièce électriquement conductrice à usiner, depuis une station d'alimentation jusqu'à un réceptacle de fil usé. On dispose habituellement sur le trajet de ce fil, de part et d'autre de la pièce, deux guides qui vont le positionner avec précision relativement à celle-ci. On appelera par la suite "zone d'usinage" l'espace compris entre ces deux guides. La machine d'électroérosion comporte aussi un générateur de courant qui fait passer une succession d'impulsions électriques entre le filélectrode et la pièce, le long de cette zone d'usinage, pour enlever par électroérosion de la matière sur la pièce. Cette zone est balayée par un liquide d'usinage, par exemple de l'eau ou une solution aqueuse. Au fur et à mesure de l'enlèvement de matière, la pièce est déplacée dans un plan perpendiculaire ou oblique par rapport à l'axe du fil-électrode, selon un trajet prédéterminé; ce mouvement relatif est commandé numériquement de façon à engendrer dans la pièce une découpe de profil prédéterminé.

On sait que le rendement et la vitesse d'usinage obtenus lors d'une découpe EDM avec un fil-électrode dépendent de la densité de courant que peut conduire ce fil, et de sa résistance à la rupture lorsqu'il est soumis simultanément à une traction et à un échauffement. En effet, une découpe précise ne peut être obtenue que si le fil est bien tendu entre les deux guides disposés de part et d'autre de la pièce à usiner. Il suffit alors de connaître la largeur de la fente découpée par le fil et de repérer la position de ces guides pour connaître avec précision celle du fil et des bords de cette fente. De plus, en augmentant la traction du fil on diminue sa vibration ainsi que les défauts dans les angles, ces derniers étant principalement dus à la flèche du fil. Ce dernier doit donc résister à une traction relativement importante (qui peut atteindre par exemple 6 kilos; elle est en général réglée entre 1 et 4 kilos) tout en étant soumis à l'échauffement dû aux étincelles et à l'effet Joule. Corne les métaux bons conducteurs de l'électricité sont en général peu résistants mécaniquement, ceci explique la difficulté à fabriquer des fils-électrodes appropriés à l'usinage à grande vitesse.

Comme décrit dans les brevets CH 620.621 et CH 620.622, la demanderesse a obtenu un fil amélioré en protégeant l'âme du fil, (composée de cuivre ou d'une âme en acier revêtue de métal bon conducteur comme le cuivre), par un dépôt de métal à bas point de fusion et de vaporisation, en particulier de zinc. Lorsqu'une décharge s'amorce sur un court-circuit, des ponts métalliques se forment entre les électrodes, dans la zone d'usinage. Ce dépôt métallique a l'avantage de transformer ces décharges en décharges érosives car ces ponts métalliques fondent très facilement sous l'effet thermique du courant de court-circuit. Lors d'un contact accidentel entre les électrodes, un court-circuit se transforme en décharge érosive en un temps très court par rapport à la durée de l'impulsion qui est elle-même de l'ordre de quelques microsecondes.

Sur les premières machines à fil, ce dépôt était réalisé en faisant passer un fil de cuivre ou d'acier dans une station de galvanoplastie, de manière à obtenir une couche externe épaisse de 1 à 25 µm, contenant au moins 50% de zinc. Un excellent compromis entre une bonne conductibilité et une forte résistance mécanique consistait à déposer successivement sur un fil d'acier une couche de cuivre, puis une couche de zinc.

Par la suite, les propriétés de ce fil galvanisé ont été encore améliorées par les fournisseurs de fil grâce à un traitement thermique.
Comme expliqué dans CH 633 739, dans le cas d'une couche de zinc déposée sur une couche ou une âme de cuivre, ce traitement thermique provoque une diffusion des atomes de zinc dans la couche de cuivre et vice versa, de sorte que le zinc pur disparaît et qu'il se forme à la surface du fil une couche d'alliage Cu-Zn, c'est-à-dire de laiton contenant en général entre 40 et 50% de zinc. Ce phénomène est appelé par le suite "interdiffusion". En chauffant le fil à l'air libre, il se forme un film d'oxyde de zinc (voir CH 634 245). Il est préconisé dans ce CH 633 739 de réaliser une surface active stratifiée, comprenant plusieurs couches de laiton séparées par un film d'oxyde de zinc; la durée de vie de la surface active est prolongée grâce à cette superposition de films d'oxyde. On procède par plusieurs dépôts de zinc, le fil étant recuit (à 600°C, par exemple, pendant quelques secondes) entre chaque dépôt. Ceci permet d'accroître la vitesse d'usinage: ainsi, pour un même diamètre de l'âme de cuivre, un même diamètre final du fil et une même épaisseur du revêtement, en procédant par exemple à 3 ou 4 dépôts et recuits on obtient un gain de vitesse qui peut dépasser 60%.
Les demandes japonaises publiées sous les nµméros 60-104.616 et 61-76.215 proposent d'alterner des couches de zinc et de cuivre par exemple, puis soit de tréfiler en chauffant assez et avec une réduction d'au moins 85% en surface afin que la diffusion soit suffisante, soit de tréfiler et de recuire en plusieurs étapes afin d'opérer cette diffusion. On obtient ainsi un fil-électrode revêtu d'une superposition de couches de divers alliages cuivre-zinc.

La fabrication de ces fil-électrodes comporte donc de nombreuses étapes.

Plus simplement, EP 381 595 et EP 415 501 proposent de ne pas opérer l'interdiffusion Zn-Cu lors de la fabrication du fil électrode avec un enrobage multicouches Zn-Cu, mais directement sur la machine EDM lors de l'utilisation du fil-électrode. En augmentant le nombre des couches tout en diminuant leur épaisseur, il est possible de réduire assez le temps nécessaire à la diffusion pour que celle-ci ait lieu dans la zone d'usinage. Ceci permet de supprimer les traitements thermiques destinés à cette diffusion lors de la fabrication du filélectrode.

Toutefois, même si la fabrication des fils connus est rendue moins complexe par la suppression des traitements thermiques destinés à l'interdiffusion, elle présente encore certains inconvénients.
D'abord, après avoir été revêtu selon l'une des variantes indiquées, le fil doit être amené par des tréfilages successifs jusqu'au diamètre final désiré pour le fil-électrode. Suite à la différence de comportement et de ductilité du ou des couches de revêtement et de l'âme, plus le diamètre du fil de départ est grand par rapport au diamètre final, et plus le revêtement est épais, plus il faut prévoir de tréfilages successifs pour éviter l'écaillement de ce revêtement. Le risque de voir le revêtement s'écailler au tréfilage est d'autant plus grand que ce revêtement est réalisé par déposition électrolytique. En effet, il est bien connu que les revêtements métalliques obtenus par dépôt galvanique sont plus "tendus" (suite à des ponts hydrogènes et à d'autres facteurs) et donc moins ductiles que le métal ou l'alliage "normal". On recommande en général de partir d'un fil de cuivre, de laiton ou d'acier revêtu de cuivre, dont le diamètre ne dépasse pas 1mm et, si on ne dépasse pas plus de 10 à 15 µm pour l'épaisseur du revêtement, de le tréfiler une première fois jusqu'à 0,4mm par exemple, puis une seconde et même une troisième fois, selon le diamètre final qui s'échelonne de 0,10 à 0,30mm. On peut améliorer les propriétés mécaniques et diminuer le risque d'écaillement en recuisant le fil à 400-500°C pour le détendre.
Un autre inconvénient, propre en particulier aux fils revêtus de zinc et de cuivre, est dû au manque d'homogénéité radiale de ces fils. En effet, après interdiffusion entre couches voisines, les alliages sont de plus en plus riches en zinc lorsqu'on va de l'âme à la surface. On obtient ainsi une succession de couches de propriétés variables le long du rayon du fil, puisque chaque phase du laiton présente des propriétés différentes. Il peut être avantageux d'avoir un revêtement composé de couches concentriques dont la composition varie en fonction du rayon (c'est-à-dire de la profondeur). Mais ce phénomène d'interdiffusion entre couches de zinc et de cuivre voisines, est difficilement contrôlable, car la phase de l'alliage obtenu et donc sa structure cristalline et ses propriétés mécaniques dépendent en particulier de la température et de la durée de la diffusion et du pourcentage des métaux en présence. Il est donc difficile de prévoir les propriétés du fil et de les reproduire d'une fabrication à l'autre. De plus, les propriétés du fil changent au fur et à mesure que le revêtement est consommé lorsqu'il s'enfonce dans la fente d'usinage, puisque des alliages différents affleurent successivement à sa surface. Ce manque d'homogénéité radiale est d'autant plus sensible que la pièce à usiner est haute ou que le fil défile lentement.

Le but de la présente invention était d'obtenir un fil-électrode ayant au moins les mêmes avantages que les fils-électrodes connus: bonne résistance à la rupture en usinage à grande vitesse, élimination des courts-circuits et de la redéposition du cuivre (dans le cas d'une âme de cuivre ou revêtue de cuivre), mais pouvant de plus être fabriqué selon une méthode beaucoup moins complexe, c'est-à-dire plus rapide et plus reproductible car permettant un meilleur contrôle des étapes de fabrication.

Un autre objet de la présente invention était d'obtenir une couche active radialement homogène, dont la teneur en zinc (ou en autre métal à bas point de vaporisation) ne varie pas lorsqu'on va de l'âme vers la surface, et dont l'épaisseur n'est pas limitée par le risque d'écaillement au tréfilage.
Le troisième objet de la présente invention était une méthode de fabrication fiable et reproductible, permettant d'obtenir un fil électrode de qualité constante, aussi bien d'une fabrication à l'autre, que durant son passage le long de la pièce usinée malgré son usure progressive dans la zone d'usinage
Ceci a été réalisé grâce aux fils et fils-électrodes constitués et fabriqués selon les revendications 1, 4 et 8.

Les fils-électrodes selon la présente invention peuvent donc être fabriqués en deux étapes seulement : une seule codéposition galvanique et un seul tréfilage. Toutefois, selon certaines variantes, les revêtements métalliques obtenus par dépôt galvanique étant plus "tendus" que le métal ou l'alliage "normal", on peut améliorer les propriétés mécaniques d'un fil-électrode selon la présente invention en le recuisant à 400-500° pour le détendre. On peut aussi prévoir une couche dite "barrière", décrite ci-dessous, afin d'empêcher la diffusion éventuelle du zinc ou autre métal à bas point de vaporisation dans l'âme.

Donc, selon la présente invention, contrairement à tout ce qui était préconisé dans l'état de la technique :
- les fils-électrodes selon la présente invention sont aussi performants que les fils connus, même lorsqu'ils sont de faible diamètre (de l'ordre de 150-100 µm, par exemple), bien qu'ils ne comportent plus d'enrobage multicouches composé d'un empilage de très fines couches (dont l'épaisseur est de l'ordre d'un µm et moins); on ne réalise pas de couches superposées de différents métaux en faisant passer le fil dans plusieurs bains galvaniques ou stations d'enduction, par déplacement chimique par exemple, de métaux différents. Au contraire, on mélange des sels de ces métaux dans un seul bain galvanique et on applique ces métaux en une seule couche;
- de façon surprenante, alors que les revêtements galvaniques étaient connus pour être peu ductiles et donc difficilement tréfilables, la demanderesse a obtenu par codépôt électrolytique de deux métaux, par exemple le zinc et le nickel, un revêtement de ductilité comparable à celle de l'âme du fil, en général de cuivre ou de laiton, bien que relativement épais (de l'ordre de 10 à 20 µm) puisque constitué par une seule couche. Le diamètre du fil ainsi revêtu peut être amené par un seul tréfilage à froid de 1 mm à 0,1mm, par exemple;
- de plus, selon une variante particulièrement avantageuse, les fils-électrodes selon la présente invention sont aussi performants que les fils connus, même lorsqu'ils sont de faible diamètre (de l'ordre de 150-100 µm, par exemple), bien qu'ils ne comportent plus d'enrobage dans lequel il y a eu ou il y aura au moment de l'usinage une interdiffusion de zinc avec un autre métal; le zinc n'est plus associé au cuivre mais à un métal, tel le nickel, avec lequel il n'interdiffuse pas.

De plus cette ductilité de la couche contenant du zinc permet de contrôler l'épaisseur de la couche active obtenue après tréfilage et d'avoir une couche régulière, donc un fil de meilleure qualité et une couche d'épaisseur reproductible, donc un fil de qualité constante.

Signalons que les fils-électrodes selon la présente invention peuvent conserver les propriétés magnétiques du nickel : pour autant qu'il y ait 20 à 30% de nickel et même moins, la couche d'alliage déposée par codéposition reste magnétique.

Rappelons que des fils-électrodes enrobés d'un alliage contenant à la fois du nickel et du zinc sont connus par le brevet CH 646 083 de la demanderesse. Ils avaient été développés dans le but de combiner l'avantage apporté par le zinc (un métal à basse température de vaporisation qui limite l'échauffement du revêtement lors des décharges, ce qui diminue le risque de rupture; on peut ainsi augmenter le courant d'usinage) à celui apporté par un alliage à haute résistivité thermique tel que certains alliage Ni-Cu-Zn ; la conductivité thermique diminue, ce qui protège le noyau du fil et permet d'augmenter encore le courant d'usinage et donc la vitesse d'usinage. Toutefois, alors que la présente invention préfère une concentration uniforme, le brevet ci-dessus recommandait de réaliser un revêtement à profil de concentration variable en créant, par un recuit approprié, un revêtement Cu-Ni-Zn riche en Ni dans les couches profondes et riches en Zn dans les couches superficielles. Une telle modulation de la teneur des métaux du revêtement est en fait peu utile, comme le montre de façon surprenante la présente invention. De plus, ce brevet CH 646 083 recommande de n'utiliser l'alliage Ni-Zn qu'en surface, et son application par électrodéposition n'est recommandée que pour des couches minces.

Le nickel est aussi connu pour être utilisé en couche barrière empêchant l'interdiffusion entre le cuivre et le zinc. En effet, dans le cas de fils revêtus de zinc ou d'alliage de zinc et ayant un noyau de cuivre ou d'alliage de cuivre ou gainé de cuivre, il est connu que la conductivité électrique de l'âme est abaissée par la diffusion du zinc dans le cuivre, éventuellement provoquée par un traitement thermique effectué lors de la réalisation de l'enrobage. Le brevet US 2,918,722 aussi bien que la demande EP 381 595 préconisent de déposer une couche de nickel entre l'âme ou la couche contenant du cuivre et la couche contenant du zinc. Une telle couche est présente dans certains modes de réalisation des fils selon la présente invention.

## Revendications

1. Fil métallique stratifié, comportant une âme métallique bonne conductrice de l'électricité, revêtue d'une seule couche d'alliage constituée par le codépôt électrolytique d'au moins deux métaux dont l'un est un métal à bas point de fusion et de vaporisation, caractérisé par le fait que cette couche d'alliage électrolytique est assez ductile pour que le diamètre de ce fil puisse être réduit dans une proportion qui va du 1/3 au 1/10éme de son diamètre initial, en une seule opération de tréfilage à froid.

2. Fil selon la revendication 1, dans lequel le métal à bas point de fusion et de vaporisation et le ou les autres métaux de l'alliage ne peuvent diffuser à chaud les uns dans les autres.

3. Fil selon la revendication 1, dans lequel la couche d'alliage électrolytique présente une ductilité très proche de celle de l'âme métallique.

4. Electrode-fil pour le découpage par électroérosion, comportant une âme métallique bonne conductrice de l'électricité, revêtue d'une seule couche d'alliage constituée par le codépôt électrolytique d'au moins deux métaux dont l'un est un métal à bas point de fusion et de vaporisation, dans laquelle les teneurs des métaux de l'alliage restent constantes sur toute l'épaisseur de cette couche.

5. Electrode-fil selon la revendication 4, dans laquelle l'âme métallique présente une composition uniforme du centre du fil à la couche d'alliage.

6. Electrode-fil selon la revendication 4, dans laquelle la couche d'alliage électrolytique est composée de nickel et de zinc.

7. Electrode-fil selon la revendication 4, constituée par une âme de cuivre ou de laiton, d'acier ou d'acier gainé de cuivre, enrobée d'une seule couche d'alliage électrolytique composée de nickel et de zinc ou d'un autre métal à bas point de fusion et de vaporisation

8. Procédé de fabrication d'une électrode-fil selon la revendication 4, dans lequel
- on applique à partir d'un seul bain d'électrodéposition, sur une âme métallique bonne conductrice de l'électricité, une couche d'un alliage constitué par au moins deux métaux dont l'un est un métal à bas point de fusion et de vaporisation, puis
- on réduit, en une seule opération de tréfilage à froid, le diamètre de ce fil dans une proportion qui va du 1/3 au 1/10ème de son diamètre initial, aucune de ces deux étapes ne provoquant la diffusion de l'un des métaux de l'alliage au sein de cet alliage ou de l'âme métallique.

9. Procédé selon la revendication 8, comportant une étape supplémentaire, constituée par le dépôt à froid d'une couche de nickel, avant de procéder à l'électrodéposition de la couche d'alliage.

10. Procédé selon la revendication 8, dans lequel la composition du bain galvanique et les paramètres électrochimiques et électriques de l'étape d'électrodéposition sont choisis de manière à assurer une composition uniforme à la couche d'alliage électrolytique.
